# EUROPEAN PATENT APPLICATION

(11) **EP 4 641 077 A1**
(43) Date of publication of application: **29.10.2025**
(21) Application number: 23938074.4
(22) Date of filing: 20.06.2023
(51) Int. Cl.: F21S 41/24, F21S 43/235

(54) **INTEGRATED OPTICAL SYSTEM, VEHICLE LAMP AND METHOD FOR REALIZING ILLUMINATION BY USING INTEGRATED OPTICAL SYSTEM**

(30) Priority: 25.05.2023 CN 202321291149 U
(71) Applicant: Hasco Vision Technology Co., Ltd., Jiading District Shanghai 201821 (CN)
(72) Inventor: WEI, Maowei, Shanghai 201821 (CN); WANG, Kai, Shanghai 201821 (CN); ZHANG, Teng, Shanghai 201821 (CN); CHEN, Zhaoyu, Shanghai 201821 (CN)
(74) Representative: Von Rohr Patentanwälte Partnerschaft mbB
(86) International application number: PCT/CN2023/101204
(87) International publication number: WO 2024/239405

(57) **Abstract**

Embodiments of the present disclosure relate to the field of vehicle signal lamps, and provide an integrated optical system, a vehicle lamp and a method for realizing illumination by using the integrated optical system. The integrated optical system comprises a light guide plate, a light guide structure and a plurality of light sources; light emitted by the light sources passes through the light guide plate and the light guide structure, respectively, and then a first light emitting effect and a second light emitting effect are achieved; the light effect of the integrated optical system is improved by combining the first light emitting effect and the second light emitting effect; and a plurality of different light emitting effects can be achieved by combining the first light emitting effect and the second light emitting effect.

## Description

### CROSS-REFERENCE TO RELATED APPLICATIONS

The present disclosure claims the priority to the Chinese patent application with the filing No. CN2023212911490 filed with the Chinese Patent Office on May 25, 2023, and entitled "INTEGRATED OPTICAL SYSTEM APPLICABLE TO VEHICLE LAMP", the contents of which are incorporated herein by reference in entirety.

### TECHNICAL FIELD

The present disclosure relates to the field of automobile signal lamps, and in particular to an integrated optical system, a vehicle lamp and a method for implementing illumination by using the integrated optical system.

### BACKGROUND ART

At present, automobile styling can directly impact the vision of consumers, especially the most striking vehicle lamp design. The light guide plate is a common optical component of a vehicle lamp, which leads out light emitted by the light sources and achieves uniform light-emitting effect, thus having high universality.

However, the inventors found in their research that the current optical system with a light guide plate has low light efficiency, and it is impossible to implement multiple light-emitting effects in one light guide plate optical system at the same time, and it is impossible to implement the signal lamp functions corresponding to multiple light sources with different colors at the same time when applied to vehicle lamps.

### SUMMARY

An objective of the present disclosure includes, for example, providing an integrated optical system, which can respectively form a first light-emitting effect and a second light-emitting effect and superimpose them, thereby improving the light efficiency of the integrated optical system, and can superpose the first light-emitting effect and the second light-emitting effect to achieve a plurality of different light-emitting effects.

Another objective includes providing a vehicle lamp, which improves the light efficiency of the vehicle lamp by integrating the first light-emitting effect and the second light-emitting effect formed by the optical system, and can superpose the first light-emitting effect and the second light-emitting effect to achieve a plurality of different light-emitting effects.

Another objective includes providing a method for implementing illumination by using an integrated optical system, which can implement illumination through the superposition of the first light-emitting effect and the second light-emitting effect respectively formed by the integrated optical system, and improve the light efficiency of illumination.

The embodiments of the present disclosure are implemented as follows.

In a first aspect, the present disclosure provides an integrated optical system, which includes a light guide plate, a light guide structure and a plurality of light sources. a light guide plate. One side of the light guide plate is a first reflecting surface, and the other side opposite to the first reflecting surface is a first light-emitting surface. The light guide structure includes a second light-emitting surface and a second reflecting surface which are correspondingly arranged, a light-emitting direction of the first light-emitting surface is the same as a light-emitting direction of the second light-emitting surface, and the first light-emitting surface and the second light-emitting surface are arranged side by side. The plurality of light sources are arranged on light incident sides of the light guide plate and the light guide structure, and light emitted by a portion of the light sources enters the light guide plate from the light incident side of the light guide plate, and is reflected by the first reflecting surface and then emitted from the first light-emitting surface; and light emitted by another portion of the light sources enters the light guide structure from the light incident side of the light guide structure, and is reflected by the second reflecting surface and emitted from the second light-emitting surface.

In an optional embodiment, the integrated optical system further includes a light shield and a bracket, and the light guide plate, the light shield and the light guide structure are sequentially stacked in the bracket.

In an optional embodiment, the light guide structure is a thick-walled light guide, and a longitudinal section of the thick-walled light guide is L-shaped.

In an optional embodiment, the thick-walled light guide includes a light guide portion and a light-emitting portion which are perpendicularly arranged, an inclined surface is arranged at a corner of the light guide portion and the light-emitting portion, the second reflecting surface is arranged on the inclined surface, and a light-emitting surface of the light-emitting portion is the second light-emitting surface.

In an optional embodiment, one surface of the light shield is attached to the first reflecting surface of the light guiding plate, and the other surface is attached to the light guide portion, the light guiding plate, the light shield and the thick-walled light guide are sequentially stacked in the bracket, and the thick-walled light guide is attached to an inner wall of the bracket.

In an optional embodiment, the light guide structure includes a light-guide groove, the light-guide groove includes a first light-guide groove and a second light-guide groove which are in communication with each other, and the first light-guide groove is obliquely arranged relative to the second light-guide groove.

In an optional embodiment, the light guide structure further includes a reflecting plate and a lens, the reflecting plate is arranged at a communication position between the first light-guide groove and the second light-guide groove, and the second reflecting surface is a reflecting surface of the reflecting plate; and
the lens is arranged at a light-emitting side of the second light-guide groove, and the second light-emitting surface is a light-emitting surface of the lens.

In an optional embodiment, the first light-guide groove and the second light-guide groove are perpendicularly arranged, and the reflecting plate is obliquely arranged on an inner wall of the bracket.

In an optional embodiment, the integrated optical system further includes a condenser, and the condenser is arranged on a light incident side of the first light-guide groove relative to the light sources.

In an optional embodiment, the light guide structure is a light guide; the light guide plate includes a first side wall and a second side wall which are adjacent; an inner side of the light shield is attached to and surrounds the first side wall and the second side wall, and an outer side of the light shield is attached to the light guide; and the light guide plate, the light shield and the light guide piece are embedded in the bracket together and are attached to an inner wall of the bracket together.

In an optional embodiment, the light guide includes a first light-guide section and a second light-guide section which are connected at an angle, the first light-guide section is arranged corresponding to the first side wall, the second light-guide section is arranged corresponding to the second side wall, and a third reflecting surface is arranged at a junction of the first light-guide section and the second light-guide section;
the second reflecting surface is arranged on an inner wall of the second light-guide section, and the second light-emitting surface is arranged on an outer wall of the second light-guide section; and
after entering the light guide, light emitted by the light sources propagates within the first light-guide section, is reflected by the third reflecting surface and propagates within the second light-guide section, and the light is reflected by the second reflecting surface and emitted from the second light-emitting surface.

In an optional embodiment, the third reflecting surface is obliquely arranged at the junction of the first light-guide section and the second light-guide section.

In an optional embodiment, the second light-emitting surface and the first light-emitting surface are arranged side by side and in the same plane, and the second reflecting surface and the second light-emitting surface are arranged correspondingly.

In an optional embodiment, the light sources includes first light sources and second light sources with different colors, and the first light sources corresponds to the light guide structure, such that the emitted light is reflected by the second reflecting surface and emitted from the second light-emitting surface; the second light sources corresponds to the light guide plate, such that the emitted light is reflected by the first reflecting surface and then emitted from the first light-emitting surface.

In an optional embodiment, the first reflecting surface is provided with patterns.

In an optional embodiment, the second reflecting surface is an aluminized reflecting surface, or the second reflecting surface is provided with patterns.

In an optional embodiment, the second light-emitting surface is provided with a pattern or dermatoglyphic pattern.

In a second aspect, the present disclosure further provides a vehicle lamp, including the integrated optical system provided in any of the above embodiments.

In a third aspect, the present disclosure further provides a method for implementing illumination by using the integrated optical system provided in any of the above embodiments, and the method includes:
starting the first light sources, such that the first light sources emit light, and light emitted by the first light sources enters the light guide plate, and the light propagates within the light guide plate until the light is reflected by the first reflecting surface and emitted from the first light-emitting surface, thereby lighting up the light guide plate to form a first light-emitting effect; and
starting the second light sources, such that the second light sources emit light, and light emitted by the second light sources enters the light guide structure, and the light propagates within the light guide structure until the light is reflected by the second reflecting surface and emitted from the second light-emitting surface, thereby lighting up the light guide structure to form a second light-emitting effect, wherein
the first light-emitting effect and the second light-emitting effect are superimposed to implement illumination.

In an optional embodiment, when a third reflecting surface is arranged in the light guide structure, the method includes:
starting the second light sources, such that light emitted by the second light sources enters the light guide structure, and the light propagates within the light guide structure until the light is sequentially reflected by the third reflecting surface and the second reflecting surface, and then the light is emitted from the second light-emitting surface, thereby lighting up the light guide structure to form a second light-emitting effect.

The beneficial effects of the integrated optical system provided in the embodiments of the present disclosure include the following. The integrated optical system can respectively form a first light-emitting effect and a second light-emitting effect and superimpose them, thereby improving the light efficiency of the integrated optical system, and can superpose the first light-emitting effect and the second light-emitting effect to achieve a plurality of different light-emitting effects.

The beneficial effects of the vehicle lamp provided in the embodiments of the present disclosure include the following. The light efficiency of the vehicle lamp is improved by superposing the first light-emitting effect and the second light-emitting effect, where the first light-emitting effect and the second light-emitting effect are formed by the optical system. The vehicle lamp can achieve a plurality of different light-emitting effects through the superposition of the first light-emitting effect and the second light-emitting effect. In addition, through the integrated optical system, the space in the lamp is optimized.

The beneficial effects of the method for implementing illumination by using an integrated optical system provided in the embodiments of the present disclosure include the following. The first light-emitting effect and the second light-emitting effect respectively formed by the integrated optical system are superimposed, so that the illumination effect is improved.

### BRIEF DESCRIPTION OF DRAWINGS

To explain the technical solutions of the embodiments of the present disclosure more clearly, the drawings will be briefly introduced. It should be understood that the drawings only show some embodiments of the present disclosure, so they should not be regarded as limiting the scope. For a person of ordinary skill in the art, other related drawings can be obtained according to these drawings without inventive effort.
FIG. 1 is a schematic sectional view of an integrated optical system with a light guide structure being a thick-walled light guide according to an embodiment of the present disclosure;
FIG. 2 is an exploded view from a first perspective of the integrated optical system with the light guide structure being a thick-walled light guide according to an embodiment of the present disclosure;
FIG. 3 is an exploded view from a second perspective of the integrated optical system with the light guide structure being a thick-walled light guide according to an embodiment of the present disclosure;
FIG. 4 is a schematic view of a back of the light guide plate in FIG. 3;
FIG. 5 is an exploded view from a third perspective of the integrated optical system with the light guide structure being a thick-walled light guide according to an embodiment of the present disclosure;
FIG. 6 is a schematic view of a front of the light guide plate in FIG. 5;
FIG. 7 is a schematic view of the thick-walled light guide in FIG. 5;
FIG. 8 is a schematic sectional view of the integrated optical system with the light guide structure including a light-guide groove and a condenser according to an embodiment of the present disclosure;
FIG. 9 is a schematic sectional view of the integrated optical system with the light guide structure including a light-guide groove according to an embodiment of the present disclosure;
FIG. 10 is a schematic sectional view of the integrated optical system with the light guide structure being a light guide according to an embodiment of the present disclosure;
FIG. 11 is a front view of the integrated optical system with the light guide structure being a light guide according to an embodiment of the present disclosure; and
FIG. 12 is a schematic view of the light guide in FIG. 11.

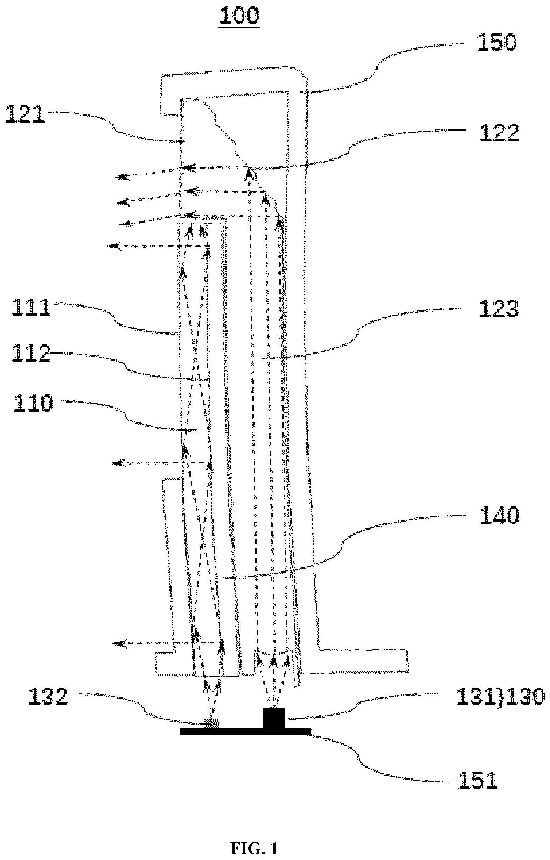

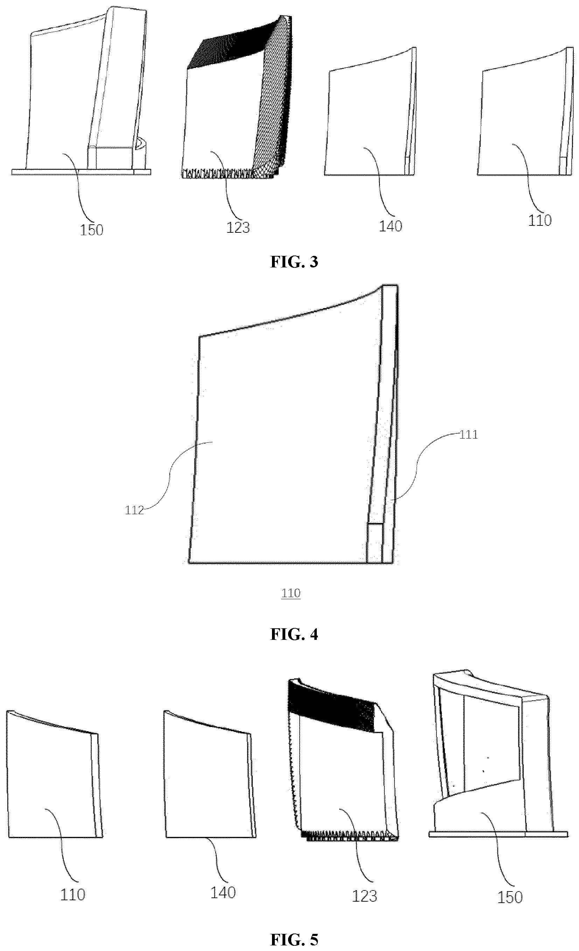

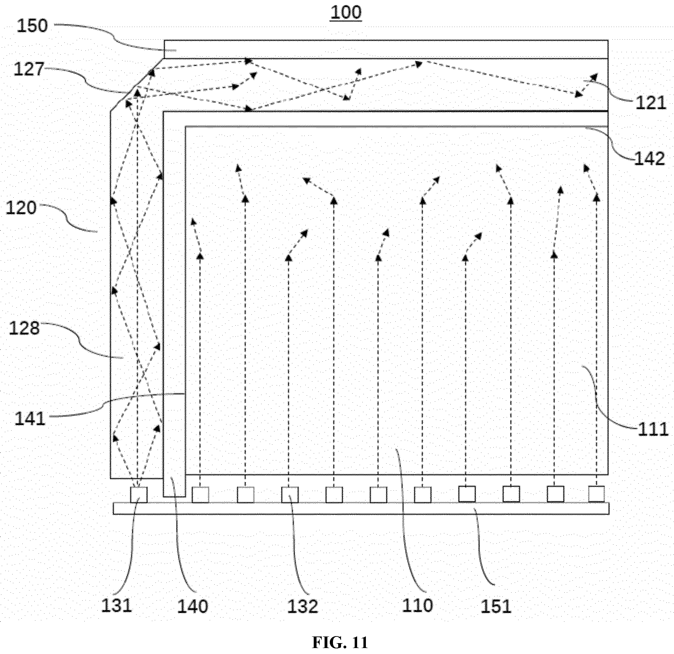

The dotted arrows in FIGS. 1 to 12 show the propagation path of light.
Reference numerals: 100- integrated optical system; 110- light guide plate; 111- first light-emitting surface; 112- first reflecting surface;
120- light guide structure; 121- second light-emitting surface; 122- second reflecting surface; 123- thick-walled light guide; 1231- light guide portion; 1232- light-emitting portion; 1233- inclined surface; 124- reflecting plate; 125- lens; 126- condenser; 127- third reflecting surface; 128- light guide; 1281- first light-guide section; 1282- second light-guide section; 129-light-guide groove;
130- light sources; 131- first light sources; 132- second light sources; 140- light shield; 141- first sidewall; 142- second sidewall; 150- bracket; 151-base plate.

### DETAILED DESCRIPTION OF EMBODIMENTS

To clarify the objectives, technical solutions, and advantages of the embodiments of the present disclosure, the technical solutions in the embodiments of the present disclosure will be clearly and completely described below with reference to the drawings. Obviously, the described embodiments are merely part of the embodiments of the present disclosure, but not all embodiments. The components of the embodiments of the present disclosure generally described and illustrated in the drawings herein may be arranged and designed in various different configurations.

Therefore, the following detailed description of the embodiments of the present disclosure provided in the accompanying drawings is not intended to limit the scope of the claimed disclosure, but merely represents selected embodiments thereof. Based on the embodiments in the present disclosure, all other embodiments obtained by a person of ordinary skill in the art without inventive effort belong to the protection scope of the present disclosure.

It should be noted that similar reference numerals and letters denote similar items in the following drawings. Thus, once an item is defined in one drawing, it requires no further definition or explanation in subsequent drawings.

In the description of the present disclosure, it should be noted that terms indicating orientations or positional relationships (e.g., "central", "upper", "lower", "left", "right", "vertical", "horizontal", "inner", and "outer") are based on the orientations or positional relationships shown in the drawings or the conventional orientations or positional relationships when the disclosed product is used. These terms are only for the convenience of describing the present disclosure and simplifying the description, rather than indicating or implying that the referred device or element must have a specific orientation, be constructed and operated in a specific orientation, and thus should not be construed as limiting the present disclosure.

In addition, terms such as "first", "second", "third", etc., are only for distinguishing descriptions and should not be construed as indicating or implying relative importance.

In addition, terms such as "horizontal", "vertical", "overhanging", etc., do not require the components to be absolutely horizontal, vertical or overhanging, but may be slightly inclined. For example, "horizontal" merely means that its direction is more horizontal relative to "vertical", and does not mean that the structure must be completely horizontal, but may be slightly inclined.

In the description of the present disclosure, it should also be noted that unless otherwise clearly specified and defined, terms such as "arrange", "mount", "connect", "couple", etc., should be interpreted broadly. For example, they may refer to a fixed connection, a detachable connection, or an integral connection; a mechanical connection or an electrical connection; a direct connection, an indirect connection through an intermediate medium, or an internal communication between two elements. For a person of ordinary skill in the art, the specific meanings of the above terms in the present disclosure can be understood in specific contexts.

It should be noted that, where there is no conflict, features in the embodiments of the present disclosure may be combined with each other.

An embodiment provides an integrated optical system 100, including a light guide plate 110, a light guide structure 120, and a plurality of light sources 130. One side of the light guide plate 110 is a first reflecting surface 112, and the other side opposite to the first reflecting surface 112 is a first light-emitting surface 111. The light guide structure 120 includes a second light-emitting surface 121 and a second reflecting surface 122 which are correspondingly arranged. The light-emitting direction of the first light-emitting surface 111 is the same as the light-emitting direction of the second light-emitting surface 121, and the first light-emitting surface 111 and the second light-emitting surface 121 are arranged side by side. The plurality of light sources 130 are arranged on the light incident sides of the light guide plate 110 and the light guide structure 120. Light emitted by a portion of the light sources 130 enters the light guide plate 110 from the light incident side of the light guide plate 110, is reflected by the first reflecting surface 112, and emitted from the first light-emitting surface 111. Light emitted by another portion of the light sources 130 enters the light guide structure 120 from the light incident side of the light guide structure 120, is reflected by the second reflecting surface 122, and emitted from the second light-emitting surface 121.

In this embodiment, the integrated optical system 100 includes a light guide plate 110, a light guide structure 120, and a plurality of light sources 130. The light guide plate 110 is provided with a first reflecting surface 112 and a second reflecting surface 122 which are correspondingly arranged. The portion of the light sources 130 are arranged on the light incident side of the light guide plate 110. Light emitted by the portion of the light sources 130 enters the light guide plate 110, propagates within the light guide plate 110, until it is reflected by the first reflecting surface 112 and emitted from the first light-emitting surface 111, thereby lighting up the light guide plate 110 to form a first light-emitting effect. The light guide structure 120 is provided with a second light-emitting surface 121 and a second reflecting surface 122 which are correspondingly arranged. Another portion of the light sources 130 are arranged on the light incident side of the light guide structure 120. Light emitted by another portion of the light sources 130 enters the light guide structure 120, propagates within the light guide structure 120, until it is reflected by the second reflecting surface 122 and emitted from the second light-emitting surface 121, thereby lighting up the light guide structure 120 to form a second light-emitting effect. Since the light-emitting direction of the first light-emitting surface 111 is the same as the light-emitting direction of the second light-emitting surface 121, and the first light-emitting surface 111 and the second light-emitting surface 121 are arranged side by side, the first light-emitting effect and the second light-emitting effect are superimposed to implement illumination, thereby improving the overall light efficiency emitted by the integrated optical system 100.

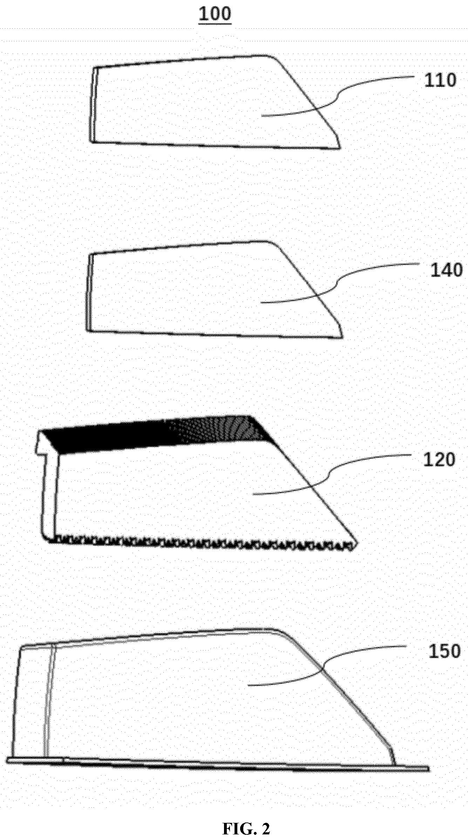

In this embodiment, referring to FIGS. 2, 3 and 5, the integrated optical system 100 further includes a light shield 140 and a bracket 150. The light guide plate 110, the light shield 140, and the light guide structure 120 are sequentially stacked. The bracket 150 is a groove-shaped vehicle lamp housing. After attaching one side of the light guide structure 120 to the inner wall of the bracket 150, one side of the light shield 140 is attached to the other side of the light guide structure 120, and the light guide plate 110 is attached to the other side of the light shield 140. The portion of the light sources 130 are arranged on the wall of the base plate 151 of the bracket 150 corresponding to the light guide plate 110, and another portion of the light sources 130 are arranged on the wall of the base plate 151 of the bracket 150 corresponding to the light guide structure 120.

In an optional embodiment, referring to FIGS. 1 to 7, the light guide structure 120 is a thick-walled light guide 123, and the longitudinal section of the thick-walled light guide 123 is L-shaped. The thick-walled light guide 123 includes a light guide portion 1231 and a light-emitting portion 1232 which are perpendicularly arranged. An inclined surface 1233 is provided at the corner of the light guide portion 1231 and the light-emitting portion 1232. The second reflecting surface 122 is provided on the inclined surface 1233, and the light-emitting surface of the light-emitting portion 1232 is the second light-emitting surface 121. One surface of the light shield 140 is attached to the first reflecting surface 112 of the light guide plate 110, and the other surface is attached to the light guide portion 1231. The light guide plate 110, the light shield 140, and the thick-walled light guide 123 are sequentially stacked in the bracket 150, and the thick-walled light guide 123 is attached to the inner wall of the bracket 150.

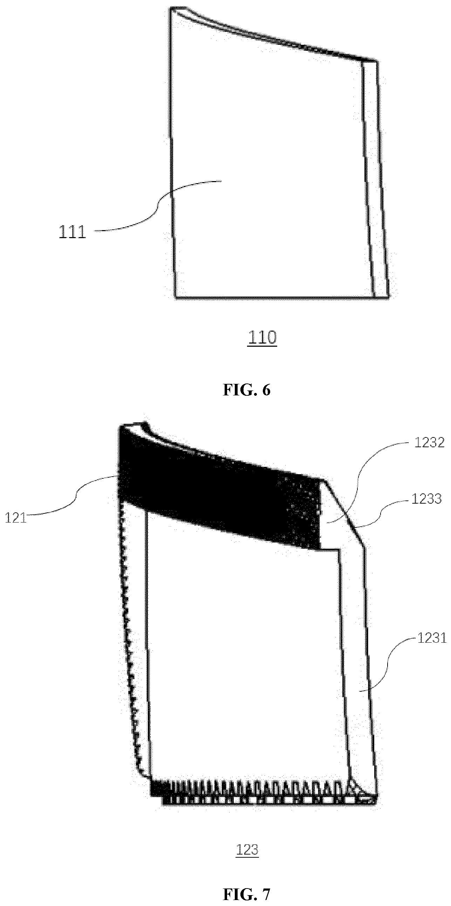

Referring to FIG. 7, the thick-walled light guide 123 formed by the perpendicularly arranged light guide portion 1231 and light-emitting portion 1232 has an L-shaped longitudinal section. One end of the light guide portion 1231 and one end of the light-emitting portion 1232 are perpendicularly arranged, and an inclined surface 1233 is provided at the corner where they are perpendicularly arranged, and the inclined surface 1233 is the second reflecting surface 122. Light sources 130 is provided at the other end of the light guide portion 1231, and this side is the light incident side. The end face of the other end of the light-emitting portion 1232 is a light-emitting surface, which is the second light-emitting surface 121. The inclined surface 1233 is formed by cutting at the perpendicular junction of the light guide portion 1231 and the light-emitting portion 1232. The inclined surface 1233 has a certain inclination angle relative to the incident light, so that the incident light can be reflected to the second light-emitting surface 121 through the inclined surface 1233.

Referring to FIGS. 2 to 7, the L-shaped thick-walled light guide 123 is arranged in the bracket 150, and the surfaces of the perpendicularly arranged light guide portion 1231 and light-emitting portion 1232 are both attached to the inner wall of the bracket 150. After attaching the light shield 140 to the other side of the light guide portion 1231, the light guide plate 110 is sequentially attached to the light shield 140. The thickness of the superposed light guide plate 110 and light shield 140 equals the thickness of the light-emitting portion 1232, so as to arrange the first light-emitting surface 111 and the second light-emitting surface 121 side-by-side at the same height and in the same plane.

Referring to FIG. 1, when the light guide structure 120 is implemented as the thick-walled light guide 123, the working principle and process of the integrated optical system 100 of this embodiment are as follows.

At the light guide plate 110, light emitted by the light sources 130 corresponding to the light incident side of the light guide plate 110 enters the light guide plate 110, propagates within the light guide plate 110, reaches the first reflecting surface 112, changes the propagation direction, and is finally emitted from the first light-emitting surface 111, thereby lighting up the light guide plate 110 to achieve a first light-emitting effect.

At the thick-walled light guide 123, light emitted by the light sources 130 corresponding to the light incident side of the thick-walled light guide 123 enters the thick-walled light guide 123, propagates within the light guide portion 1231 of the thick-walled light guide 123, and after reaching the second reflecting surface 122 at the corner of the thick-walled light guide 123, the light is reflected to propagate within the light-emitting portion 1232, propagates to the second light-emitting surface 121 correspondingly arranged with respect to the second reflecting surface 122, and then is emitted, thereby lighting up the thick-walled light guide 123 to achieve a second light-emitting effect.

The first light-emitting effect and the second light-emitting effect are superimposed to improve the light efficiency of the integrated optical system 100, and a variety of different light-emitting effects can be achieved through the superposition of the first light-emitting effect and the second light-emitting effect.

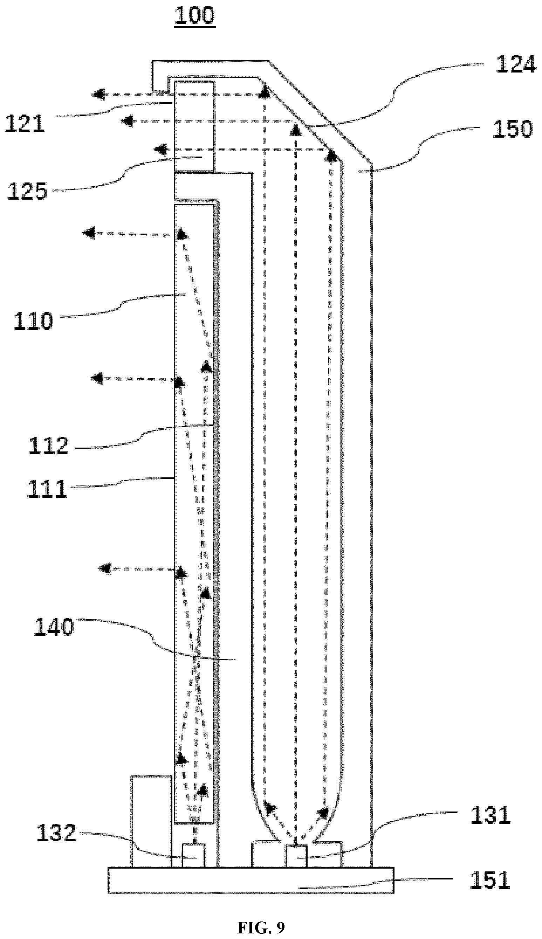

In an optional embodiment, referring to FIG. 9, the light guide structure 120 can include a light-guide groove 129, a reflecting plate 124, and a lens 125. The light-guide groove 129 includes a first light-guide groove 129 and a second light-guide groove 129 that are in communication with each other, and the first light-guide groove 129 is obliquely arranged relative to the second light-guide groove 129. The reflecting plate 124 is arranged at a communication position between the first light-guide groove 129 and the second light-guide groove 129, and the second reflecting surface 122 is the reflecting surface of the reflecting plate 124. The lens 125 is arranged on the light-emitting side of the second light-guide groove 129, and the second light-emitting surface 121 is the light-emitting surface of the lens 125. The first light-guide groove 129 and the second light-guide groove 129 are perpendicularly arranged, and the reflecting plate 124 is obliquely arranged on the inner wall of the bracket 150.

The light shield 140 is L-shaped, and the light shield 140 is arranged in the bracket 150 so that an L-shaped light-guide groove 129 is formed between one side of the light shield 140 and the inner wall of the bracket 150. The L-shaped light-guide groove 129 is divided into a first light-guide groove 129 and a second light-guide groove 129 which are perpendicularly arranged. One end of the first light-guide groove 129 is perpendicularly connected to one end of the second light-guide groove 129, and the reflecting surface of the reflecting plate 124 is obliquely arranged at the perpendicular junction as the second reflecting surface 122. The reflecting plate 124 can be connected and fixed to the inner wall of the bracket 150. A portion of light sources 130 are arranged at the other end of the first light-guide groove 129, which is the light incident side. A lens 125 is arranged at the other end of the second light-guide groove 129, and the lens 125 is retained in a snap-fit manner between the light shield 140 and the inner wall of the bracket 150, and the light-emitting surface of the lens 125 is the second light-emitting surface 121. The second light-emitting surface 121 of the lens 125 and the first light-emitting surface 111 of the light guide plate 110 are located in the same plane.

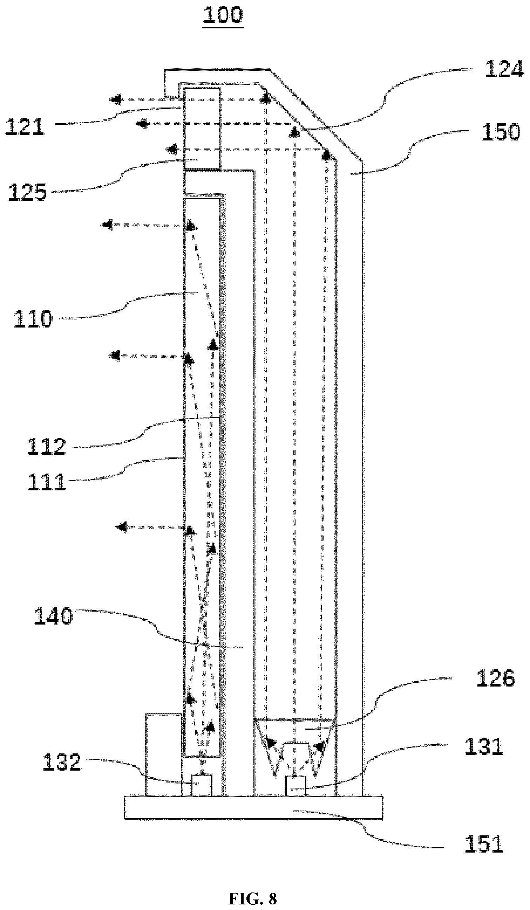

In other embodiments, referring to FIG. 8, the integrated optical system 100 further includes a condenser 126, and the condenser 126 is arranged on the light incident side of the first light-guide groove 129 relative to the light sources 130. That is, the condenser 126 or a collimating lens 125 arranged on the light incident side of the first light-guide groove 129 can converge light emitted by the light sources 130, convert the divergent light into parallel light or approximately parallel light, and make the light reach the reflecting plate 124 as much as possible to ensure the light efficiency of the light guide structure 120.

Referring to FIG. 8, when the light guide structure 120 includes the light-guide groove 129, the working principle and process of the integrated optical system 100 of this embodiment are as follows:

At the light guide plate 110, light emitted by the light sources 130 corresponding to the light incident side of the light guide plate 110 enters the light guide plate 110, propagates within the light guide plate 110, reaches the first reflecting surface 112, changes the propagation direction, and is finally emitted from the first light-emitting surface 111, thereby lighting up the light guide plate 110 to achieve a first light-emitting effect.

At the light guide structure 120, after the light emitted by the light sources 130 corresponding to the light incident side of the first light-guide groove 129 passes through the condenser 126, the light is collimated and propagates within the first light-guide groove 129, is reflected after reaching the obliquely arranged reflecting plate 124, propagates within the second light-guide groove 129, and then is emitted from the second light-emitting surface 121 of the lens 125, thereby achieving a second light-emitting effect.

The first light-emitting effect and the second light-emitting effect are superimposed to improve the light efficiency of the integrated optical system 100, and a variety of different light-emitting effects can be achieved through the superposition of the first light-emitting effect and the second light-emitting effect.

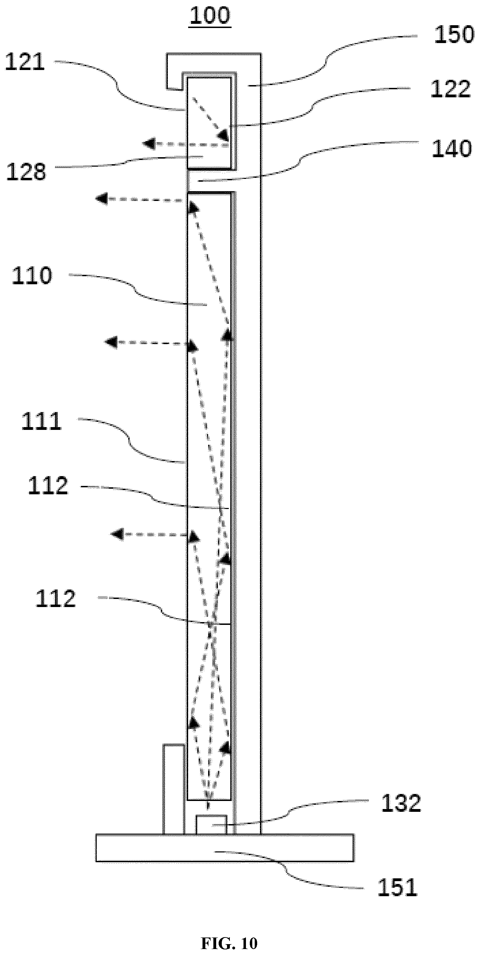

In an optional embodiment, referring to FIGS. 10 to 12, the light guide structure 120 is a light guide 128. The light guide plate 110 includes adjacent first and second sidewalls 141 and 142. The inner side of the light shield 140 is attached to and surrounds the first and second sidewalls 141 and 142, and the outer side of the light shield 140 is attached to the light guide 128. The light guide plate 110, the light shield 140, and the light guide 128 are jointly embedded in the bracket 150 and jointly attached to the inner wall of the bracket 150.

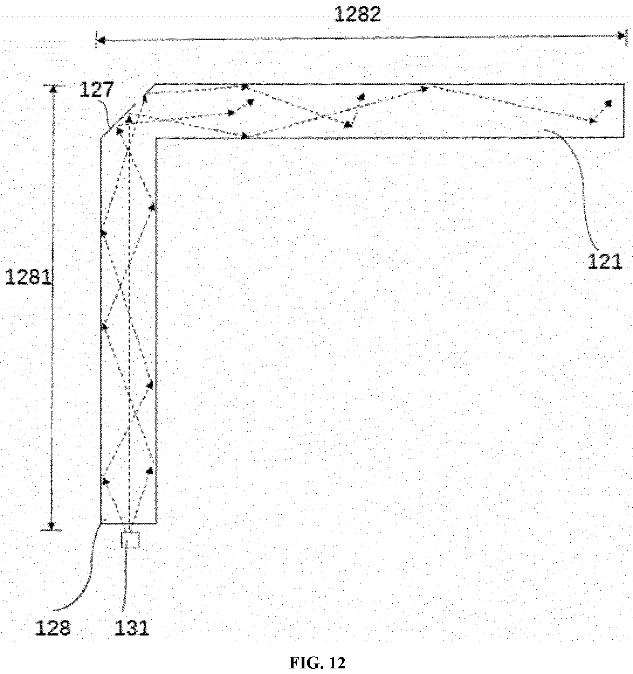

Referring to FIG. 12, the light guide 128 includes a first light-guide section 1281 and a second light-guide section 1282 connected at an angle. The first light-guide section 1281 is arranged corresponding to the first sidewall 141, and the second light-guide section 1282 is arranged corresponding to the second sidewall 142. A third reflecting surface 127 is provided at the junction of the first light-guide section 1281 and the second light-guide section 1282. The second reflecting surface 122 is provided on the inner wall of the second light-guide section 1282, and the second light-emitting surface 121 is provided on the outer wall of the second light-guide section 1282. After entering the light guide 128, light emitted by the light sources 130 propagates within the first light-guide section 1281, is reflected by the third reflecting surface 127 and propagates within the second light-guide section 1282, and is simultaneously reflected by the second reflecting surface 122 and emitted from the second light-emitting surface 121. The third reflecting surface 127 is obliquely arranged at the junction of the first light-guide section 1281 and the second light-guide section 1282. One end of the first light-guide section 1281 and one end of the second light-guide section 1282 are perpendicularly arranged, and the third reflecting surface 127 is obliquely arranged at the perpendicular junction. Another portion of light sources 130 are arranged at the other end of the first light-guide section 1281. A second reflecting surface 122 and a second light-emitting surface 121 are correspondingly arranged on the second light-guide section. The second reflecting surface 122 is attached to the inner wall of the bracket 150 and can be obliquely arranged relative to the inner wall of the bracket 150.

Specifically, the light shield 140 is an L-shaped structure. The inner side of the light shield 140 includes a first and second sidewall 141 and a second sidewall 142 that are adjacent to each other. The light guide plate 110 is attached to the first sidewall 141 and the second sidewall 142 and arranged on the inner side of the light shield 140, and the light guide 128 is attached to the outer sidewall of the light guide plate 110. After the light guide plate 110 is attached to the inner wall of the light shield 140 and the light guide 128 is attached to the outer wall of the light shield 140, they are jointly embedded in the bracket 150, one end of each is jointly attached to the inner wall of the bracket 150, and the other end is flush, that is, the second light-emitting surface 121 of the light guide 128 and the first light-emitting surface 111 of the light guide plate 110 are located in the same plane.

Referring to FIGS. 9 to 12, when the light guide structure 120 is implemented as the light guide 128, the working principle and process of the integrated optical system 100 provided in this embodiment are as follows:
At the light guide plate 110, light emitted by the light sources 130 corresponding to the light incident side of the light guide plate 110 enters the light guide plate 110, propagates within the light guide plate 110, reaches the first reflecting surface 112, and is finally emitted from the first light-emitting surface 111, thereby lighting up the light guide plate 110 to achieve a first light-emitting effect.

At the light guide 128, light emitted by the light sources 130 corresponding to the light incident side of the first light-guide section 1281 enters the light guide 128, propagates within the first light-guide section 1281, is reflected by the third reflecting surface 127 and propagates within the second light-guide section 1282, and is simultaneously reflected by the second reflecting surface 122 of the second light-guide section 1282, and finally emitted from the second light-emitting surface 121, thereby lighting up the light guide 128 to achieve a second light-emitting effect.

The first light-emitting effect and the second light-emitting effect are superimposed to improve the light efficiency of the integrated optical system 100, and a variety of different light-emitting effects can be achieved through the superposition of the first light-emitting effect and the second light-emitting effect.

In this embodiment, the second light-emitting surface 121 and the first light-emitting surface 111 are arranged side by side and in the same plane, and the second reflecting surface 122 is correspondingly arranged with respect to the second light-emitting surface 121. The second light-emitting surface 121 and the first light-emitting surface 111 are arranged side by side and in the same plane, so that the first light-emitting effect and the second light-emitting effect are consistent.

In this embodiment, the light sources 130 includes first light sources 131 and second light sources 132 with different colors. The first light sources 131 corresponds to the light guide structure 120, so that light emitted by the first light sources 131 is reflected by the second reflecting surface 122 and emitted from the second light-emitting surface 121. The second light sources 132 corresponds to the light guide plate 110, so that light emitted by the second light sources 132 is reflected by the first reflecting surface 112 and emitted from the first light-emitting surface 111.

The light sources 130 can be LEDs, and the LEDs can be arranged in rows corresponding to the light guide plate 110 and the light guide structure 120. Specifically, the first light sources 131 is arranged corresponding to the light incident side of the light guide plate 110, and the second light sources 132 is arranged corresponding to the light incident side of the thick-walled light guide 123, so that the integrated optical system 100 can set the first light sources 131 and the second light sources 132 with different colors according to different application scenarios. When the light guide plate 110 and the light guide structure 120 are simultaneously lit and the light sources 130 of both are different in color, one integrated optical system 100 implements two light-emitting effects with different colors. For example, the color of the first light sources 131 can be yellow, and the color of the second light sources 132 can be red, for warning during night driving. Of course, the colors of the first light sources 131 and the second light sources 132 can both be white for daytime running lights.

In this embodiment, the first reflecting surface 112 is provided with patterns. The first reflecting surface 112 is provided on the light guide plate 110. The light guide plate 110 can be made of different scattering materials or provided with patterns on the first reflecting surface 112 as required, so as to improve the light reflectivity and scatter the light, so that the light can be emitted from the corresponding first light-emitting surface 111, improve the light efficiency of the vehicle lamp, and achieve a uniform light-emitting effect.

In this embodiment, the second reflecting surface 122 is an aluminized reflecting surface, or the second reflecting surface 122 is provided with patterns. The second reflecting surface 122 is provided on the light guide structure 120. After light is reflected by the second reflecting surface 122, when it passes through the aluminized reflecting surface or patterns of the second light-emitting surface 121, the light can be scattered and reflected, thereby improving the light reflectivity, so that the light reflectivity can be improved, and the light can exit from the corresponding second light-emitting surface 121, thus improving the light efficiency of the vehicle lamp.

In this embodiment, the second light-emitting surface 121 is provided with patterns or dermatoglyphics. The second light-emitting surface 121 is arranged on the light-emitting side of the light guide structure 120. After light passes through the patterns or dermatoglyphics on the second light-emitting surface 121, the light is refracted at a certain angle, so that the light is more divergent, and a uniform light-emitting effect is achieved.

The working principle and process of an integrated optical system 100 provided in this embodiment are as follows:
Referring to FIGS. 1 to 7, at the light guide plate 110, light emitted by the light sources 130 corresponding to the light incident side of the light guide plate 110 enters the light guide plate 110, propagates within the light guide plate 110, and reaches the first reflecting surface 112. Because the first reflecting surface 112 is provided with patterns, the light is scattered and reflected, changes the propagation direction, and is finally emitted from the first light-emitting surface 111, thereby lighting up the light guide plate 110 to achieve a uniform first light-emitting effect.

At the thick-walled light guide 123, light emitted by the light sources 130 corresponding to the light incident side of the thick-walled light guide 123 enters the thick-walled light guide 123, propagates within the thick-walled light guide 123, and after reaching the second reflecting surface 122 at the corner of the thick-walled light guide 123, the light is reflected and propagates to the second light-emitting surface 121 correspondingly arranged with respect to the second reflecting surface 122 and is then emitted. The second light-emitting surface 121 is provided with patterns, the light is scattered, the thick-walled light guide 123 is lit, and a uniform second light-emitting effect is achieved.

In this embodiment, the space in the vehicle lamp is optimized by integrating the light guide plate 110, the light shield 140, the light guide structure 120, and the bracket 150. The first reflecting surface 112 of the light guide plate 110 and the second reflecting surface 122 of the light guide structure 120 are provided with patterns or aluminum plating, so that the reflectivity is improved and the light efficiency of the vehicle lamp is improved. At the same time, by providing patterns or dermatoglyphics on the first reflecting surface 112, the second reflecting surface 122, the first light-emitting surface 111, or the second light-emitting surface 121, the light is scattered to improve the light emission uniformity. By setting the first light sources 131 and the second light sources 132 with different colors, the different first light-emitting effect and second light-emitting effect are respectively formed on the light guide plate 110 and the light guide structure 120, so that the two signal lamp functions of the light sources 130 with different colors are integrally implemented, and the light efficiency and light emission uniformity of the vehicle lamp are improved.

The present disclosure further provides a vehicle lamp including the above-mentioned integrated optical system 100.

The present disclosure further provides a method for implementing illumination by using the integrated optical system 100, including using the above-mentioned integrated optical system 100, and the method includes:
starting the first light sources 131, such that the first light sources 131 emit light, and light emitted by the first light sources 131 enters the light guide plate 110, and the light propagates within the light guide plate 110 until the light is reflected by the first reflecting surface 112 and emitted from the first light-emitting surface 111, thereby lighting up the light guide plate 110 to form a first light-emitting effect; and starting the second light sources 132, such that the second light sources 132 emit light, and light emitted by the second light sources 132 enters the light guide structure 120, and the light propagates within the light guide structure 120 until the light is reflected by the second reflecting surface 122 and emitted from the second light-emitting surface 121, thereby lighting up the light guide structure 120 to form a second light-emitting effect, where the first light-emitting effect and the second light-emitting effect are superimposed to implement illumination.

In other embodiments, when the third reflecting surface 127 is arranged in the light guide structure 120, the method includes: starting the second light sources 132, such that light emitted by the second light sources 132 enters the light guide structure 120, and the light propagates within the light guide structure 120 until the light is sequentially reflected by the third reflecting surface 127 and the second reflecting surface 122, and then the light is emitted from the second light-emitting surface 121, thereby lighting up the light guide structure 120 to form a second light-emitting effect.

The foregoing is merely a specific implementation of the present disclosure, but the protection scope of the present disclosure is not limited thereto. A person of ordinary skill in the art could readily conceive of any variations or substitutions within the technical scope disclosed herein, and such variations or substitutions shall be encompassed within the protection scope of the present disclosure. Therefore, the protection scope of the present disclosure shall be determined by the protection scope of the appended claims.

### INDUSTRIAL PRACTICALITY

According to the disclosure, a first light-emitting effect and a second light-emitting effect are respectively formed and superimposed by a light guide plate and a light guide structure, so that the light effect of the integrated optical system is improved, and a plurality of different light-emitting effects can be achieved through the superposition of the first light-emitting effect and the second light-emitting effect. According to the vehicle lamp provided by the present disclosure, the light guide plate and the light guide structure are integrated, so that the space in the vehicle lamp is optimized.

## Claims

1. An integrated optical system, comprising:
a light guide plate, wherein one side of the light guide plate is a first reflecting surface, and the other side opposite to the first reflecting surface is a first light-emitting surface;
a light guide structure, comprising a second light-emitting surface and a second reflecting surface which are correspondingly arranged, wherein a light-emitting direction of the first light-emitting surface is the same as a light-emitting direction of the second light-emitting surface, and the first light-emitting surface and the second light-emitting surface are arranged side by side; and
a plurality of light sources, wherein the plurality of light sources are arranged on light incident sides of the light guide plate and the light guide structure, and light emitted by a portion of the light sources enters the light guide plate from the light incident side of the light guide plate, and is reflected by the first reflecting surface and then emitted from the first light-emitting surface; and light emitted by another portion of the light sources enters the light guide structure from the light incident side of the light guide structure, and is reflected by the second reflecting surface and emitted from the second light-emitting surface.

2. The integrated optical system according to claim 1, wherein the integrated optical system further comprises a light shield and a bracket, and the light guide plate, the light shield and the light guide structure are sequentially stacked in the bracket.

3. The integrated optical system according to claim 1 or 2, wherein the light guide structure is a thick-walled light guide, and a longitudinal section of the thick-walled light guide is L-shaped.

4. The integrated optical system according to any one of claims 1 to 3, wherein the thick-walled light guide comprises a light guide portion and a light-emitting portion which are perpendicularly arranged, an inclined surface is arranged at a corner of the light guide portion and the light-emitting portion, the second reflecting surface is arranged on the inclined surface, and a light-emitting surface of the light-emitting portion is the second light-emitting surface.

5. The integrated optical system according to any one of claims 1 to 4, wherein one surface of the light shield is attached to the first reflecting surface of the light guide plate, and the other surface is attached to the light guide portion, the light guide plate, the light shield and the thick-walled light guide are sequentially stacked in the bracket, and the thick-walled light guide is attached to an inner wall of the bracket.

6. The integrated optical system according to claim 1 or 2, wherein the light guide structure comprises a light-guide groove, the light-guide groove comprises a first light-guide groove and a second light-guide groove which are in communication with each other, and the first light-guide groove is obliquely arranged relative to the second light-guide groove.

7. The integrated optical system according to any one of claims 1, 2 and 6, wherein the light guide structure further comprises a reflecting plate and a lens, wherein the reflecting plate is arranged at a communication position between the first light-guide groove and the second light-guide groove, and the second reflecting surface is a reflecting surface of the reflecting plate; and
the lens is arranged at a light-emitting side of the second light-guide groove, and the second light-emitting surface is a light-emitting surface of the lens.

8. The integrated optical system according to any one of claims 1, 2, 6 and 7, wherein the first light-guide groove and the second light-guide groove are perpendicularly arranged, and the reflecting plate is obliquely arranged on an inner wall of the bracket.

9. The integrated optical system according to any one of claims 1, 2 and 6 to 8, wherein the integrated optical system further comprises a condenser, and the condenser is arranged on a light incident side of the first light-guide groove relative to the light sources.

10. The integrated optical system according to claim 1 or 2, wherein the light guide structure is a light guide; the light guide plate comprises a first side wall and a second side wall which are adjacent; an inner side of the light shield is attached to and surrounds the first side wall and the second side wall, and an outer side of the light shield is attached to the light guide; and the light guide plate, the light shield and the light guide piece are embedded in the bracket together and are attached to an inner wall of the bracket together.

11. The integrated optical system according to any one of claims 1, 2 and 10, wherein the light guide comprises a first light-guide section and a second light-guide section which are connected at an comprised angle, wherein the first light-guide section is arranged corresponding to the first side wall, the second light-guide section is arranged corresponding to the second side wall, and a third reflecting surface is arranged at a junction of the first light-guide section and the second light-guide section; and
the second reflecting surface is arranged on an inner wall of the second light-guide section, and the second light-emitting surface is arranged on an outer wall of the second light-guide section, after entering the light guide, light emitted by the light sources propagates within the first light-guide section, is reflected by the third reflecting surface and propagates within the second light-guide section, and the light is reflected by the second reflecting surface and emitted from the second light-emitting surface.

12. The integrated optical system according to any one of claims 1, 2, 10 and 11, wherein the third reflecting surface is obliquely arranged at the junction of the first light-guide section and the second light-guide section.

13. The integrated optical system according to any one of claims 1 to 12, wherein the second light-emitting surface and the first light-emitting surface are arranged side by side and in a same plane, and the second reflecting surface and the second light-emitting surface are arranged correspondingly.

14. The integrated optical system according to any one of claims 1 to 13, wherein the light sources comprises first light sources and second light sources with different colors, and the first light sources corresponds to the light guide structure, such that the emitted light is reflected by the second reflecting surface and emitted from the second light-emitting surface; the second light sources corresponds to the light guide plate, such that the emitted light is reflected by the first reflecting surface and then emitted from the first light-emitting surface.

15. The integrated optical system according to any one of claims 1 to 14, wherein the first reflecting surface is provided with patterns.

16. The integrated optical system according to any one of claims 1 to 15, wherein the second reflecting surface is an aluminized reflecting surface, or the second reflecting surface is provided with patterns.

17. The integrated optical system according to any one of claims 1 to 16, wherein the second light-emitting surface is provided with patterns or dermatoglyphics.

18. A vehicle lamp, comprising the integrated optical system according to any one of claims 1 to 17.

19. A method for implementing illumination by using an integrated optical system, comprising the integrated optical system according to any one of claims 1 to 17, wherein the method comprises:
starting the first light sources, such that the first light sources emit light, and light emitted by the first light sources enters the light guide plate, and the light propagates within the light guide plate until the light is reflected by the first reflecting surface and emitted from the first light-emitting surface, thereby lighting up the light guide plate to form a first light-emitting effect; and
starting the second light sources, such that the second light sources emit light, and light emitted by the second light sources enters the light guide structure, and the light propagates within the light guide structure until the light is reflected by the second reflecting surface and emitted from the second light-emitting surface, thereby lighting up the light guide structure to form a second light-emitting effect, wherein
the first light-emitting effect and the second light-emitting effect are superimposed to implement illumination.

20. The method for implementing illumination by using an integrated optical system according to claim 19, wherein when a third reflecting surface is arranged in the light guide structure, the method comprises:
starting the second light sources, such that light emitted by the second light sources enters the light guide structure, and the light propagates within the light guide structure until the light is sequentially reflected by the third reflecting surface and the second reflecting surface, and then the light is emitted from the second light-emitting surface, thereby lighting up the light guide structure to form a second light-emitting effect.
